# EUROPEAN PATENT SPECIFICATION

(11) **EP 3 985 272 B1**
(45) Date of publication and mention of the grant of the patent: **15.05.2024**
(21) Application number: 21202559.7
(22) Date of filing: 14.10.2021
(51) Int. Cl.: F16C 35/00, B60C 23/00, B60B 27/00

(54) **WHEEL HUB FOR AN AGRICULTURAL OR WORK VEHICLE**
RADNABE FÜR EIN LANDWIRTSCHAFTS- ODER ARBEITSFAHRZEUG
MOYEU DE ROUE POUR VÉHICULE AGRICOLE OU DE TRAVAIL

(30) Priority: 14.10.2020 IT 202000024172
(43) Date of publication of application: 20.04.2022
(73) Proprietor: CNH Industrial Italia S.p.A., 10156 Torino (IT)
(72) Inventor: MIGLIORANZA, Francesco, 41125 Modena (IT)
(74) Representative: CNH Industrial IP Department

(56) References cited:
- EP-A1- 3 103 662
- EP-A1- 3 144 161
- WO-A1-2012/084912
- WO-A1-2013/056988
- WO-A1-2016/005936
- WO-A1-2017/040802
- WO-A1-2019/002781
- US-A- 1 112 596
- US-A1- 2006 207 705

## Description

### Field of the invention

The present invention relates to the field of wheel hubs for agricultural and work vehicles, in particular of the centrally inflated type.

### State of the art

The "central tire inflation system" is defined as the system that allows the wheels to be inflated using ducts that connect the tires to a source of compressed air on board the vehicle, allowing the tire pressure to be varied even while the vehicle is in motion.

The wheel hubs of agricultural and work vehicles are different from the hubs of road vehicles, albeit of heavy vehicles. While in the hubs for industrial vehicles the rotating portion is fitted over the spindle, in agricultural machinery the rotating part consists of a shaft rotatably supported by a fixed external bell as shown in the patent application WO2012/084912A1 .

Therefore, there is a need to find a simple way to apply a central inflation system to agricultural or work vehicles as well.

If not specifically excluded in the detailed description below, what is described in this chapter is to be considered as an integral part of the detailed description.

### Summary of the invention

The object of the present invention is to propose a simple way to apply a central inflation system also to agricultural or work machines.

The basic idea of the present invention is to exploit a so called dry chamber in an intermediate portion of the wheel hub of an agricultural or work vehicle to install a central tire inflation system.

More specifically, the hubs of work vehicles include a bell in which a portion of the transmission is housed in an oil bath. An axle comprises a pair of opposing bells and therefore, at least one gasket is provided for each of the two bells so as to define a central portion of the axle in which a bevel gear and/or a differential lubricated in an oil bath can be arranged.

At the free end of the bell there is a spindle support bearing. The bearing is lubricated by means of a grease which is held in place by a pair of sealing gaskets so as to define a chamber lubricated by grease.

A first central area of the axle is therefore defined, which is lubricating oil-tight seal, an end area which is grease-tight seal for each hub.

For each hub, a dry chamber is identified between the central zone of the axle and the end zone of the hub, in which a first radial opening is made, which allows the dry chamber to be pressurized. The spindle is axially drilled from the support end of a wheel until it intercepts the dry chamber. The end of the wheel support is integral in rotation with the wheel, while the first opening, in the housing, is firm and integral with the vehicle and therefore easy to be connected to a source of compressed air, therefore, the solution is of simple and economic realization.

The dependent claims describe preferred variants of the invention, forming an integral part of this description.

### Brief description of the figures

Further objects and advantages of the present invention will become clear from the following detailed description of an example of its embodiment (and its variants) and from the attached drawings given purely by way of non-limiting explanation, in which:

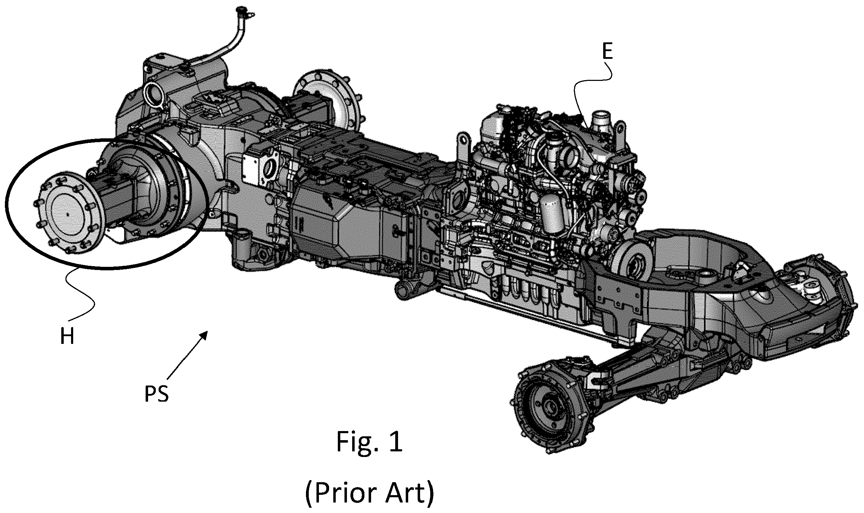

Figure 1 shows an overall view of an example of a propulsion system of an agricultural or work vehicle, according to the known art;
Figure 2 shows a wheel hub according to an axial section of the propulsion system of Figure 1, but modified according to the present invention;
Figure 3 shows an enlargement of an end portion of the hub shown in Figure 2;
Figure 4 shows a work or agricultural vehicle implementing the present invention.

The same numbers and letters of reference in the figures identify the same elements or components or functions.

It should also be noted that the terms "first", "second", "third", "upper", "lower" and the like can be used here to distinguish various elements. These terms do not imply a spatial, sequential or hierarchical order for the modified elements unless it is specifically indicated or inferred from the text.

The elements and features illustrated in the various preferred embodiments, including drawings, can be combined with each other without however departing from the scope of this application as described below.

### Detailed description of exemplary embodiments

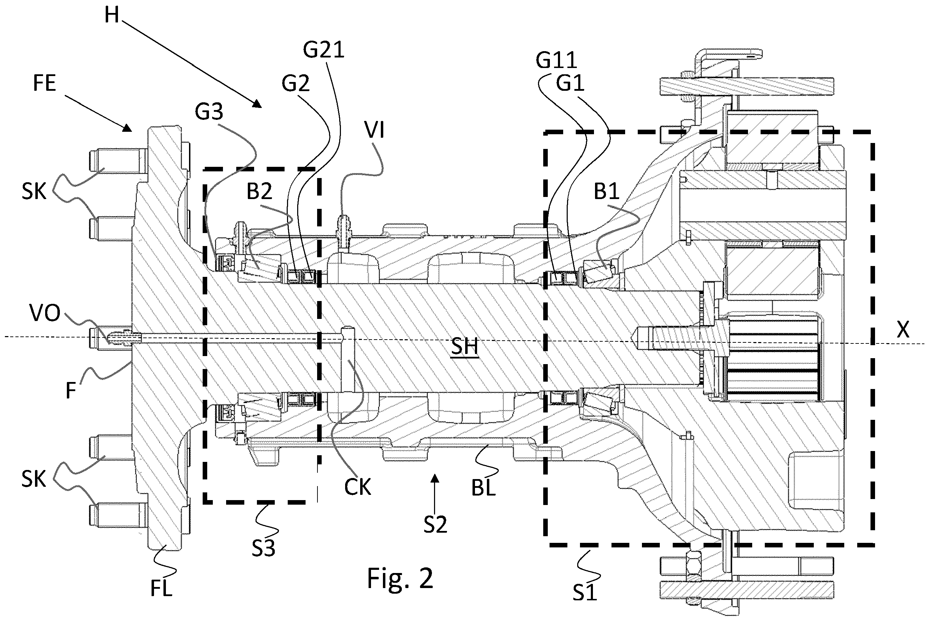

With reference to Figure 2, the wheel hub H of an agricultural or work vehicle VHE object of the present invention comprises a fixed housing BL, defining a development axis X. A spindle SH is arranged inside the housing and coaxially with it, which abuts externally from the bell by means of a flange FL integral with the spindle. The bell is tapered towards the free end FE from which the spindle SH protrudes with the relative flange FL necessary for the coupling of a vehicular wheel W.

The development axis X can also be an axis of rotation for the spindle and/or for at least one axial section of the bell. The flange comprises connecting means SK, for example, pins or threaded holes, for fixing the rim of a wheel in a per se known manner.

The spindle is rotatably associated with the bell by at least one pair of bearings B1, B2.

The external bearing B2 is arranged proximal to the free end FE of the hub H.

According to the development axis X, the external bearing is confined, in an axial direction, by an intermediate gasket G2 and an external gasket G3. It is evident that the name "external" indicates the fact that the gasket G3 is accessible from the external environment, while the intermediate gasket G2 (or internal G1 described below) is bordered by the dry chamber S2, which is completely internal to the hub, as better specified below.

The outer bearing B2 lubricated with grease is arranged in the end chamber S3 defined by the pair of gaskets G2 and G3, therefore the gaskets G2 and G3 are capable to seal the grease contained in the end chamber S3.

The internal bearing B1 supports the spindle SH at the central part of the axle, which includes an opposing pair of hubs H. A gasket G1 separates the dry chamber S2 from a central chamber S1 of the axle, in which the internal bearing B1 is housed. The central volume is in an oil bath, therefore the G1 gasket is liquid-tight.

The gasket G1, together with a homologous gasket of the opposite hub (not shown) with which the axle is formed, defines the internal chamber S1 in an oil bath.

According to the present invention, the bell is provided with an opening VI practiced approximately radially at the dry chamber S2, furthermore the spindle comprises an internal duct CK, which from the opening VO made in the surface F of the flange FL, intended to support the wheel (not shown), extends inside the spindle until it reaches the dry chamber S3. Preferably, the duct comprises a first axial portion, at least parallel to the development axis X and preferably coaxial with the development axis X, and a second portion approximately radial and consecutive to the axial portion.

Since the pressurization level of the dry chamber may not be compatible with the gaskets G1, G2 and G3, then, preferably, at least two gaskets G21 and G11 for air pressure sealing are provided, arranged internally between the gaskets G2 and G1. The conduit CK is arranged to open into the dry chamber S2 between the pressure seals G21 and G11.

Preferably, but not necessarily, the gasket G21, proximal to the gasket G2, is arranged next to the gasket G2. Preferably, but not necessarily, the gasket G11, proximal to the gasket G1, is arranged next to the gasket G1.

It must be understood that the pressure gaskets can also be arranged in other positions to restrict the portion intended to be pressurized of the dry chamber S2.

It is evident that the opening VI, being made in the fixed bell, is easily connectable to a wheel pressure adjustment circuit to be associated with the hub. The circuit is obviously connected with a source of compressed air, such as a compressor or a compressed air tank as well as being selectively connectable with the external environment in case one wants to reduce the tire pressure.

It is evident that the opening VO, being made in the rotating flange FL with the spindle SH, is integral with the wheel (not shown) .

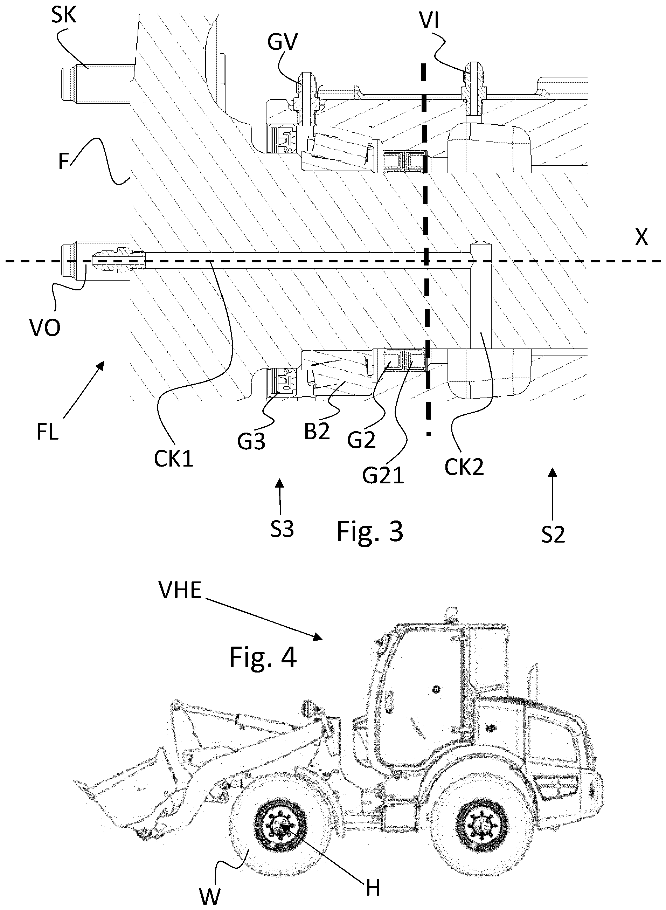

Figure 3 shows an enlargement of the end portion of the hub.

In particular, the two portions of the duct CK are visible, the first axial CK1 and the second axial or oblique CK2.

Figure 3 also shows the opening GV necessary to fill chamber S3 with grease.

The present invention also relates to an agricultural or work vehicle VHE, as shown in figure 4, equipped with an axle formed by an opposing pair of hubs according to what is described above.

Implementation variants of the described non-limiting example are possible, without however departing from the scope of protection of the present invention, including all the equivalent embodiments for a person skilled in the art, as defined by the appended claims.

From the above description, the person skilled in the art is able to realize the object of the invention without introducing further construction details.

## Claims

1. Wheel hub (H) for an agricultural or work vehicle comprising a fixed bell (BL) defining a development axis (X), within which a spindle (SH) is coaxially associated in a rotatable way, which abuts externally from the bell by means of a flange (FL) arranged for being coupled to a relative vehicle wheel, inside the hub being defined in succession a first chamber (S1) for containing oil, a second dry chamber (S2) and a third chamber (S3) for containment grease, wherein the bell comprises a passing through opening (VI) at said second chamber (S2), and wherein said spindle (SH) comprises a passing through duct (CK) between said flange (FL) and said second chamber, in such a way to connect the first opening with a pressure adjustment circuit and said through duct with a relating vehicle wheel, wherein said second chamber is axially confined by a pair of pressure sealing gaskets (G11, G21), said hub (H) is **characterized in that** a first gasket of said pair of gaskets (G11, G21) is arranged next to a grease seal gasket (G2) and a second gasket of said pair of gaskets (G11, G21) is placed next to an oil seal (G1).

2. Hub according to claim 1, wherein said third chamber is arranged at the free end (FE) of the hub when in operative conditions.

3. Hub according to claim 1 or 2, wherein in said first and third chambers an inner bearing (B1) and an outer bearing (B2) are respectively arranged, to support the spindle within the bell.

4. Hub according to any one of the preceding claims, wherein said through duct (CK) comprises an opening in one face (F) of the flange arranged to face the relative wheel.

5. Hub according to any one of the preceding claims, wherein said through duct comprises a first portion (CK1) axial, parallel or coaxial with the development axis (X) of the hub (H), and a second radial or oblique portion (CK2) which extends between the first portion of the through duct and the second chamber.

6. Vehicle axle comprising a pair of opposing hubs (H), wherein it centrally defines a chamber in an oil bath, in which each of said hubs is according to any one of claims 1 to 5.

7. Work or agricultural vehicle (VHE) comprising a central inflation system comprising a wheel hub according to any one of claims 1 to 5.

## Patentansprüche

1. Radnabe (H) für ein landwirtschaftliches Fahrzeug oder ein Arbeitsfahrzeug mit einer feststehenden Glocke (BL), die eine Längsachse (X) definiert, in der eine Radachse (SH) koaxial in einer drehbaren Weise angeordnet ist, die mittels eines Flansches (FL) außen angrenzend an die Glocke angeordnet ist, um mit einem entsprechenden Fahrzeugrad gekoppelt zu sein, wobei im Inneren der Nabe auf eine erste Kammer (S1) zur Aufnahme von Öl folgend eine zweite trockene Kammer (S2) und eine dritte Klammer (S3) zur Aufnahme von Schmierfett definiert sind, wobei die Glocke eine Durchgangsöffnung (VI) an der zweiten Kammer (S2) aufweist, und wobei die Radachse (SH) einen Durchgangskanal (CK) zwischen dem Flansch (FL) und der zweiten Kammer aufweist, um die erste Öffnung mit einem Druckverstellkreislauf und den Durchgangskanal mit einem entsprechendem Fahrzeugrad zu verbinden, wobei die zweite Kammer durch ein Paar von Druckdichtungen (G11, G21) axial begrenzt ist, wobei die Nabe (H) **dadurch gekennzeichnet ist, dass** eine erste Dichtung des Paars von Dichtungen (G11, G21) neben einer Schmierfett abdichtenden Dichtung (G2) angeordnet ist und eine zweite Dichtung des Paars von Dichtungen (G11, G21) neben einer Öldichtung (G1) angeordnet ist.

2. Nabe nach Anspruch 1, wobei die dritte Kammer an dem freien Ende (FE) der Nabe angeordnet ist, wenn diese sich in einem Betriebszustand befindet.

3. Nabe nach Anspruch 1 oder 2, wobei in der ersten und in der dritten Kammer jeweils ein inneres Lager (B1) und ein äußeres Lager (B2) angeordnet sind, um die Radachse innerhalb der Glocke zu lagern.

4. Nabe nach einem der vorhergehenden Ansprüche, wobei der Durchgangskanal (CK) eine Öffnung in einer Stirnfläche (F) des Flansches aufweist, die dem zugehörigen Rad zugewandt ist.

5. Nabe nach einem der vorhergehenden Ansprüche, wobei der Durchgangskanal einen ersten Abschnitt (CK1), der axial, parallel oder koaxial zu der Längsachse (X) der Radnabe (H) ist, und einen zweiten radialen oder schrägen Abschnitt (CK2) aufweist, der sich zwischen dem ersten Abschnitt des Durchgangskanals und der zweiten Kammer erstreckt.

6. Fahrzeugachse mit einem Paar gegenüberliegenden Naben (H), wobei diese zentral eine Kammer in einem Ölbad definiert, in der jeweils die Naben nach einem der Ansprüche 1 bis 5 vorgesehen sind.

7. Arbeitsfahrzeug oder landwirtschaftliches Fahrzeug (VHE) mit einem zentralen Befüllsystem, das eine Radnabe nach einem der Ansprüche 1 bis 5 umfasst.

## Revendications

1. Moyeu de roue (H) pour un véhicule agricole ou véhicule de travail comprenant une cloche fixe (BL) définissant un axe de développement (X), à l'intérieur duquel un axe (SH) est associé coaxialement de manière rotative, qui vient en butée à l'extérieur de la cloche au moyen d'un flasque (FL) agencé pour être couplé à une roue relative du véhicule, à l'intérieur du moyeu étant définies successivement une première chambre (SI) pour contenir l'huile, une deuxième chambre sèche (S2) et une troisième chambre (S3) pour contenir la graisse, dans lequel la cloche comprend une ouverture traversante (VI) au niveau de ladite deuxième chambre (S2), et dans lequel ledit axe (SH) comprend un conduit traversant (CK) entre ledit flasque (FL) et ladite deuxième chambre, de manière à raccorder la première ouverture à un circuit de réglage de pression et ledit conduit traversant à une roue de véhicule correspondante, dans lequel ladite deuxième chambre est confinée axialement par une paire de joints d'étanchéité à compression (GII, G21), ledit moyeu (H) est **caractérisé en ce qu'**un premier un joint de ladite paire de joints (GII, G21) est agencé à côté d'un joint d'étanchéité à graisse (G2) et un second joint de ladite paire de joints (GII, G21) est placé à côté d'un joint d'étanchéité à huile (GI).

2. Moyeu selon la revendication 1, dans lequel ladite troisième chambre est agencée à l'extrémité libre (FE) du moyeu lorsqu'il est en état de fonctionnement.

3. Moyeu selon la revendication 1 ou la revendication 2, dans lequel, dans lesdites première et troisième chambres, un roulement intérieur (BI) et un roulement extérieur (B2) sont respectivement agencés pour soutenir l'axe à l'intérieur de la cloche.

4. Moyeu selon l'une quelconque des revendications précédentes, dans lequel ledit conduit traversant (CK) comprend une ouverture dans une face (F) du flasque agencée pour faire face à la roue relative.

5. Moyeu selon l'une quelconque des revendications précédentes, dans lequel ledit conduit traversant comprend une première partie (CKI) axiale, parallèle ou coaxiale à l'axe de développement (X) du moyeu (H), et une seconde partie radiale ou oblique (CK2) qui s'étend entre la première partie du conduit traversant et la deuxième chambre.

6. Essieu de véhicule comprenant une paire de moyeux opposés (H), dans lequel il définit de manière centrale une chambre dans un bain d'huile, dans laquelle chacun desdits moyeux est conforme à l'une quelconque des revendications 1 à 5.

7. Véhicule de travail ou véhicule agricole (VHE) comprenant un système central de gonflage comprenant un moyeu de roue selon l'une quelconque des revendications 1 à 5.
